# EUROPEAN PATENT APPLICATION

(11) **EP 4 684 948 A2**
(43) Date of publication of application: **28.01.2026**
(21) Application number: 25222499.3
(22) Date of filing: 13.10.2021
(51) Int. Cl.: B29D 22/02

(54) **INTERNAL TENSION MEMBER OF INFLATABLE PRODUCT, MANUFACTURING APPARATUS AND METHOD THEREFOR, AND INFLATABLE PRODUCT**

(30) Priority: 20.10.2020 CN 202011126174; 20.10.2020 CN 202022339634 U
(62) Divisional of application: 21202440.0
(71) Applicant: Bestway Inflatables & Material Corp., Shanghai 201812 (CN)
(72) Inventor: Huang, Shuiyong, Shanghai, 201812 (CN)
(74) Representative: Gulde & Partner

(57) **Abstract**

Provided is an internal tension member of an inflatable product, the internal tension member comprising: a first tension part comprising a first inner base strip and a first outer base strip; a second tension part, spaced apart from the first tension part and comprising a second inner base strip and a second outer base strip; and a wound element comprising a wire wound in a spiral manner around the first inner base strip and the second inner base strip; wherein the first inner base strip and the first outer base strip are welded together with first portions of the wire therebetween, and the second inner base strip and the second outer base strip are welded together with second portions of the wire therebetween.

## Description

### CROSS-REFERENCE TO RELATED APPLICATION

### BACKGROUND

### Technical Field

Apparatuses and methods consistent with exemplary embodiments relate to the field of inflatable products, and in particular to an internal tension member of an inflatable product, a manufacturing apparatus, and manufacturing method therefor, and an inflatable product having the internal tension member.

### Description of the Related Art

An inflatable product may include inner sheets used to maintain a specific shape. For example, in an inflatable mattress, a plurality of inner sheets is provided between a surface sheet and a bottom sheet thereof to prevent the surface sheet and the bottom sheet from being excessively expanded outward during inflation of the inflatable mattress.

The material of these inner sheets may be a mesh sandwiched material or a polyvinyl chloride (PVC) material, where the mesh sandwiched material is composed of two sheets of PVC and a layer of fabric sandwiched between the two sheets of PVC. Such sheets may be heavy and expensive, and while an inner sheet made from PVC material is slightly lighter, is still accounts for most of the weight of the inflatable product, and is easily deformable.

It is desirable to reduce the weight of inflatable products, while preventing them from deforming due to internal air pressure.

### SUMMARY

Example embodiments may address at least the above problems and/or disadvantages as well as other disadvantages not described above. Also, example embodiments are not required to overcome the disadvantages described above, and may not overcome any of the problems described above.

According to an aspect of an example embodiment, the present invention provides an apparatus for manufacturing an internal tension member comprises: a support frame; a base plate having a size which fits within an inside of the support frame; a base strip conveying device comprising: two inner base strip reels, two outer base strip reels, and a traction wheel; a wire winding device comprising: a rotation device disposed around the base plate, and wire winding guide shafts symmetrically arranged with respect to the base plate; and a welding device positioned between the wire winding device and the traction wheel.

Preferably a distance between an upper surface of the base plate and a lower surface of the base plate may be constant or adjustable.

Preferably at least one of the wire winding guide shafts may be moveable with respect to another of the wire winding guide shafts.

Preferably the base strip conveying device may further comprise at least one inner base strip tension wheel adapted to the two inner base strip reels and at least one outer base strip tension wheel adapted to the two outer base strip reels.

Preferably the rotation device may comprise a ring-shaped rotary table and a plurality of spools, wherein the ring-shaped rotary table comprises a plurality of uniformly spaced wire-outlet heads disposed on a circumference thereof, each of the plurality of wire-outlet heads corresponding to one of the plurality of spools.

Preferably the apparatus may further comprise a cutoff device arranged on an output end of the traction wheel.

According to an aspect of another example embodiment, the present invention provides a manufacturing apparatus comprising: a support frame; a base plate configured to pass through an inside of the support frame; a base strip conveying device comprising: a first inner base strip reel configured to supply a first inner base strip, a second inner base strip reel configured to supply a second inner base strip, a first outer base strip reel configured to supply a first outer base strip, a second outer base strip reel configured to supply a second outer base strip, and a traction wheel configured to tension each of the first inner base strip, the second inner base strip, the first outer base strip, and the second outer base strip; a wire winding device comprising: a rotation device configured to wind a wire around the base plate, and a plurality of wire winding guide shafts, symmetrically arranged with respect to the base plate and each configured to guide the wire around the base plate; and a welding device configured to weld the first inner base strip to the first outer base strip and to weld the second inner base strip to the second outer base strip.

According to an aspect of another example embodiment, the present invention provides a method for manufacturing an internal tension member comprises the step of: conveying, in parallel, a first inner base strip and a second inner base strip to a wire winding device; winding a wire around the first inner base strip and the second inner base strip; conveying, in parallel, afirst outer base strip and a second outer base strip, such that the first outer base strip faces the first inner base strip and the second outer base strip faces the second inner base strip; and welding the first outer base strip to the first inner base strip and welding the second outer base strip to the second inner base strip.

Preferably the method may further comprise the step of adjusting a size of a circumference of the winding of the wire.

According to an aspect of another example embodiment, the present invention provides an internal tension member of an inflatable product comprising: a first tension part comprising a first inner base strip and a first outer base strip; a second tension part, spaced apart from the first tension part and comprising a second inner base strip and a second outer base strip; and a wound element comprising a wire wound in a spiral manner around the first inner base strip and the second inner base strip; wherein the first inner base strip and the first outer base strip are welded together with first portions of the wire therebetween, and the second inner base strip and the second outer base strip are welded together with second portions of the wire therebetween.

Preferably the first tension part may be substantially parallel to the second tension part, and a pitch at which the wire is wound around the first inner base strip and the second inner base strip may be even.

According to an aspect of another example embodiment, the present invention provides an inflatable product comprising: a first sheet; a second sheet spaced apart from the first sheet; and an internal tension member according to the invention, wherein the first outer base strip is connected to the first sheet and the second outer base strip is connected to the second sheet.

Preferably the inflatable product may further comprise: at least one auxiliary sheet comprising: two side parts connected to one of the first sheet and the second sheet, and a middle part, disposed between the two side parts and connected to one of the first outer base strip and the second outer base strip.

Preferably the first outer base strip may be welded to the first sheet such that a welding mark thereof is one of a closed ring and a line, and the second outer base strip may be welded to the second sheet such that a welding mark thereof is one of a closed ring and a line; wherein a plurality of internal tension members may be arranged in a lattice manner in the inflatable product.

Preferably each of the first sheet, the second sheet, the first tension part, and the second tension part may comprise one of polyvinyl chloride and thermoplastic polyurethane elastomer.

Preferably the inflatable product may comprise one of an inflatable mattress, an inflatable spa, and an inflatable surfboard.

### BRIEF DESCRIPTION OF THE DRAWINGS

The above and/or other aspects will become apparent and more readily appreciated from the following description of example embodiments, taken in conjunction with the accompanying drawings, in which:
FIG. 1 is an exploded schematic diagram of an internal tension member of an inflatable product according to an example embodiment of the present invention;
FIG. 2 is a perspective view of an apparatus for manufacturing an internal tension member of an inflatable product (hereinafter referred to as the apparatus) according to an example embodiment of the present invention, in a non-operating state;
FIG. 3 is another perspective view of the apparatus shown in FIG. 2 in the non-operating state;
FIG. 4 is a perspective view of a wire winding device in the apparatus according to an example embodiment in the non-operating state;
FIG. 5 is a perspective view of the wire winding device and a welding device in the apparatus according to an example embodiment in the non-operating state;
FIG. 6 is a perspective view of the apparatus shown in FIG. 2 in an operating state;
FIG. 7 is another perspective view of the apparatus shown in FIG. 2 in the operating state;
FIG. 8 is another perspective view of the apparatus shown in FIG. 2 in the operating state;
FIG. 9 is another perspective view of the apparatus shown in FIG. 2 in the operating state;
FIG. 10 is a partial schematic diagram of the principle of an apparatus according to an example embodiment of the present invention;
FIG. 11a is a perspective view of an inflatable product according to an example embodiment of the present invention, FIG. 11b is a schematic diagram of the inside of the inflatable product shown in

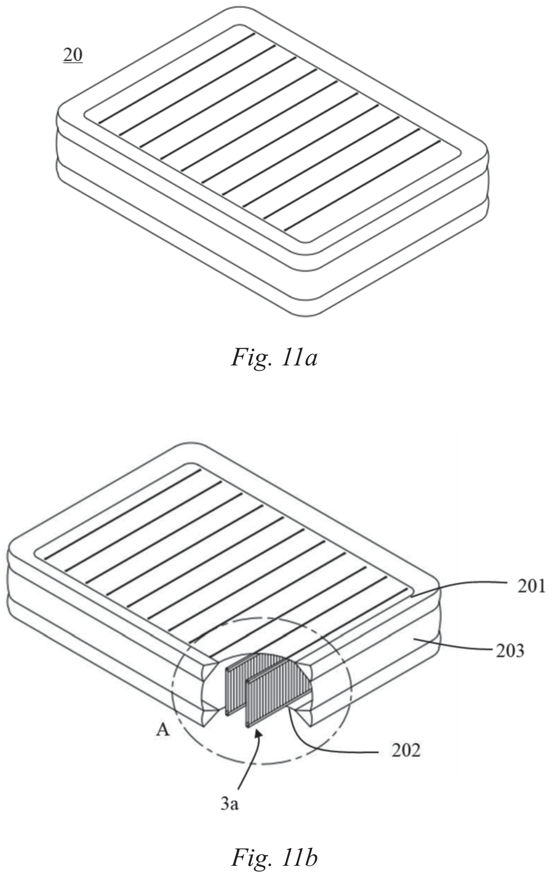

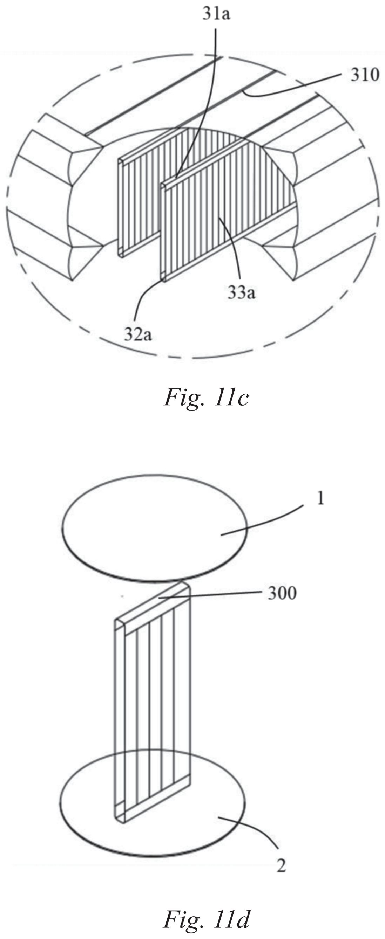

FIG. 11a, FIG. 11c is an enlarged schematic diagram of part A in FIG. 11b, and FIG. 11d is a schematic diagram of an example embodiment in which an internal tension member of the inflatable product is connected to the inside of the inflatable product;

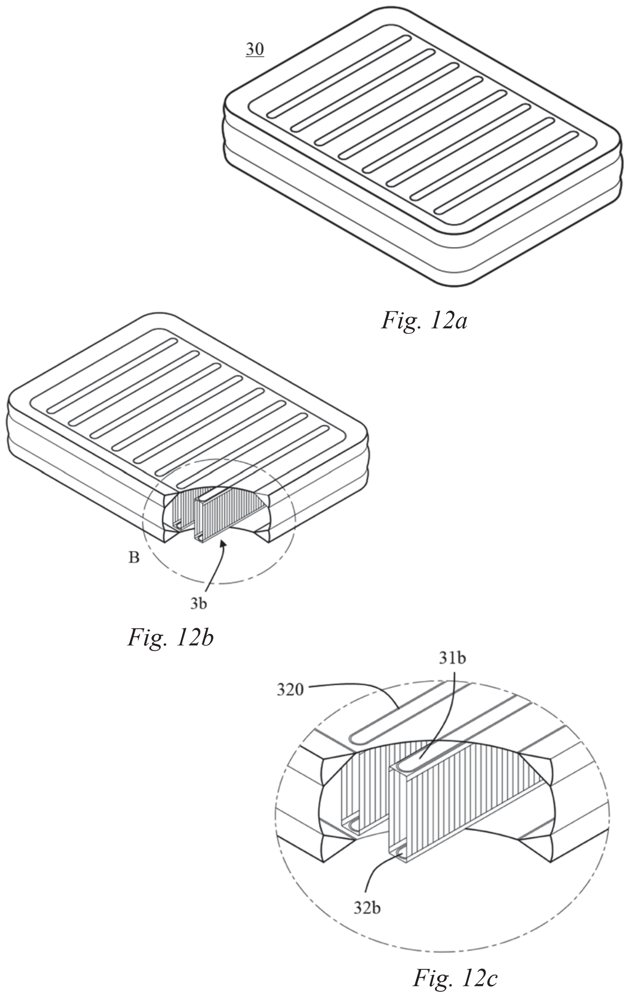

FIG. 12a is a perspective view of an inflatable product according to another example embodiment of the present invention, FIG. 12b is a schematic diagram of the inside of the inflatable product shown in FIG. 12a, and FIG. 12c is an enlarged schematic diagram of part B in FIG. 12b;

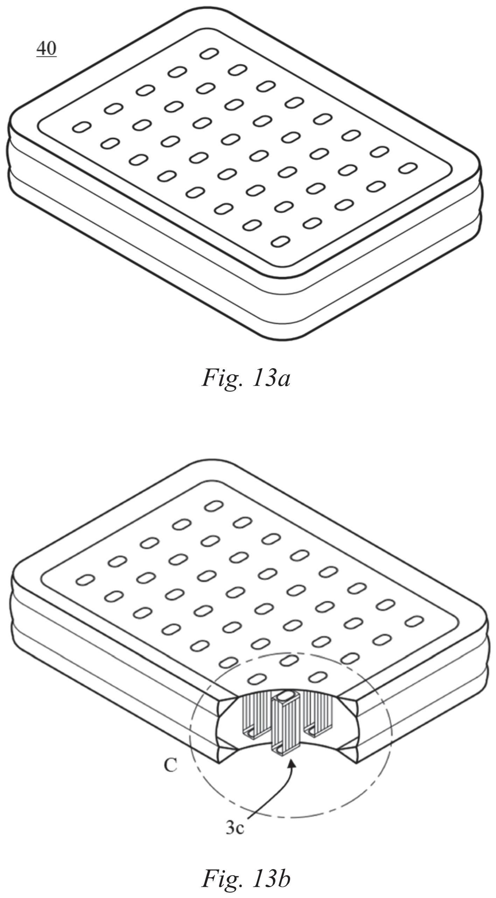

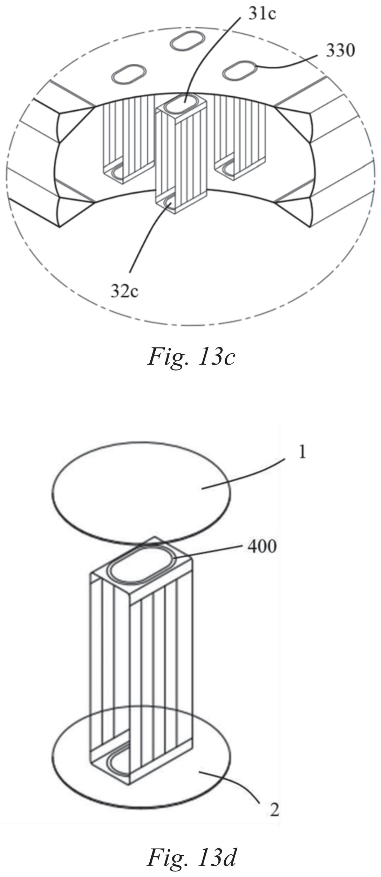

FIG. 13a is a perspective view of an inflatable product according to another example embodiment of the present invention, FIG. 13b is a schematic diagram of the inside of the inflatable product shown in FIG. 13a, FIG. 13c is an enlarged schematic diagram of part C in FIG. 13b, and FIG. 13d is a schematic diagram of another example embodiment in which an internal tension member of the inflatable product is connected to the inside of the inflatable product;

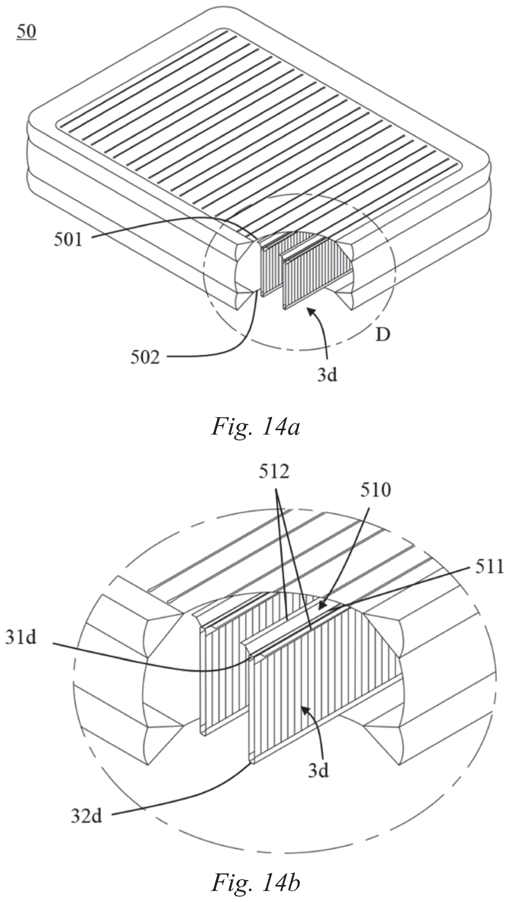

FIG. 14a is a schematic diagram of the inside of an inflatable product according to another example embodiment of the present invention, and FIG. 14b is an enlarged schematic diagram of part D in FIG. 14a;

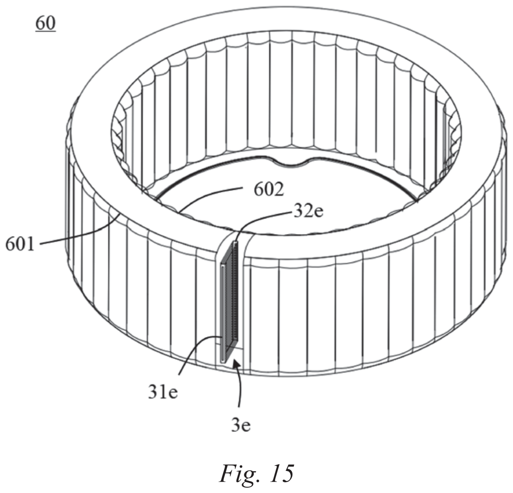

FIG. 15 is a perspective view of an inflatable product according to a further example embodiment;

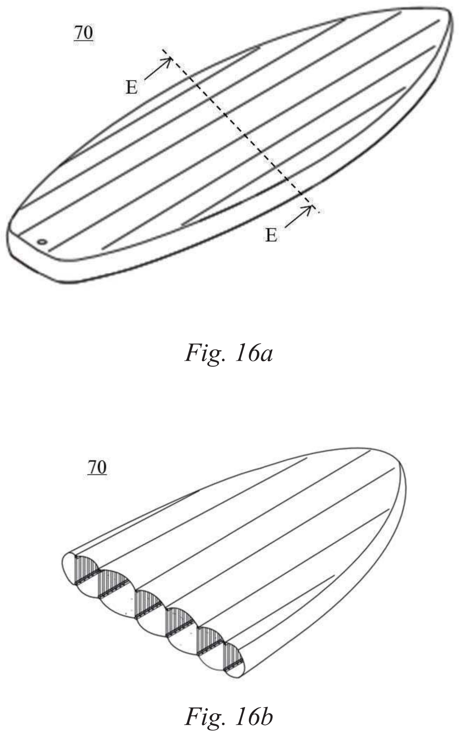

FIG. 16a is a perspective view of an inflatable product according to a further example embodiment of the present invention, and FIG. 16b is a cross-sectional view of the inflatable product shown in FIG. 16a; and

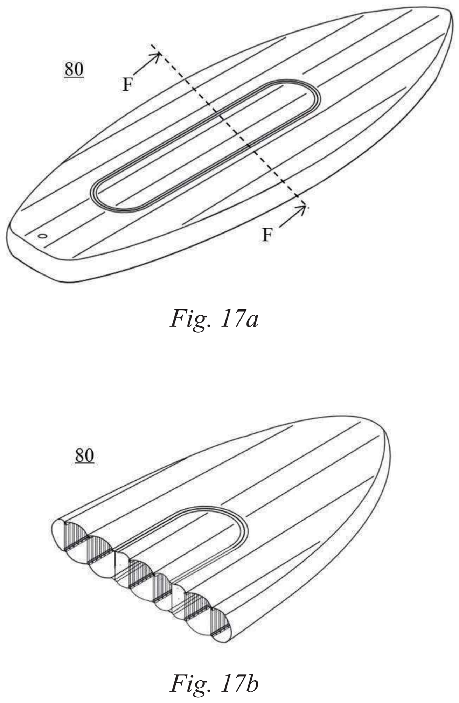

FIG. 17a is a perspective view of an inflatable product according to a further example embodiment of the present invention, and FIG. 17b is a cross-sectional view of the inflatable product shown in FIG. 17a.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these exemplary embodiments pertain may not be described here in detail.

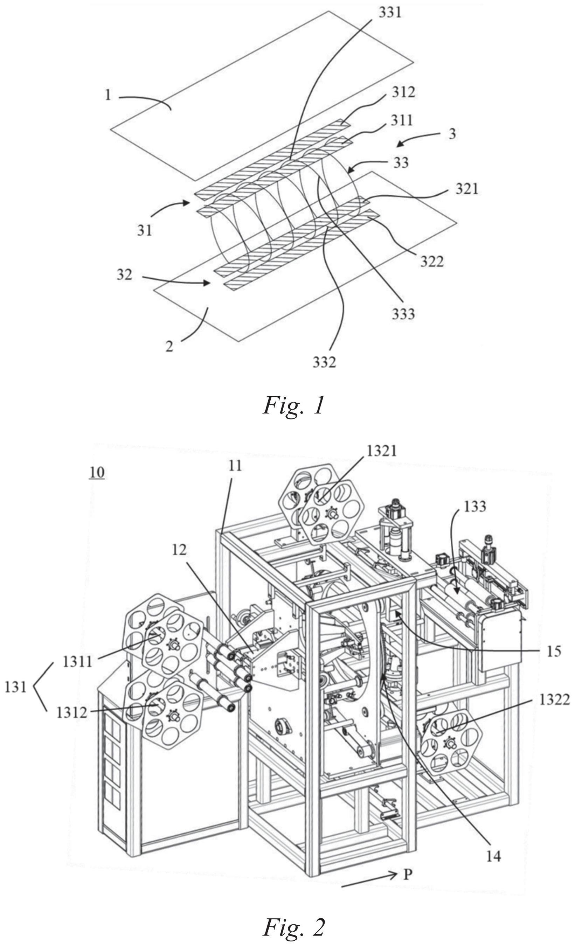

Referring to FIG. 1, an inflatable product of an example embodiment is shown, in which an internal tension member 3 is arranged between a first sheet 1 and a second sheet 2 of the inflatable product, and the internal tension member 3 shown in FIG. 1 is shown in a state separated from the first sheet 1 and the second sheet 2. The internal tension member 3 comprises a first tension part 31 and asecond tension part 32, spaced apart from the first tension part, and a wound element 33 for connecting the first tension part 31 and the second tension part 32. The first tension part 31 comprises a first inner base strip 311 and a first outer base strip 312 which are welded together, and the second tension part 32 comprises a second inner base strip 321 and a second outer base strip 322 which are welded together. Before the first inner base strip 311 is connected to the first outer base strip 312 by welding and the second inner base strip 321 is connected to the second outer base strip 322 by welding, the wound element 33 is wound around the first inner base strip 311 and the second inner base strip 321 in a spiral manner. **In** order to clearly show the winding manner of the wound element 33, FIG. 1 only exemplarily shows one continuous wire which is wound around the first inner base strip 311 and the second inner base strip 321 in a spiral manner, that is to say that, as shown in the example of FIG. 1, the wound element 33 comprises only one continuous wire. However, the wound element 33 may alternately comprise two or more wires. After the first inner base strip 311 is connected to the first outer base strip 312 by welding and the second inner base strip 321 is connected to the second outer base strip 322 by welding, the continuous wire has first portions 331 sandwiched between the first inner base strip 311 and the first outer base strip 312 and second portions 332 sandwiched between the second inner base strip 321 and the second outer base strip 322. The first tension part 31 and the second tension part 32 of the internal tension member 3 may be arranged in parallel, and at least one continuous wire may be wound around the first inner base strip 311 and the second inner base strip 321 in a spiral manner with an equal pitch.

The first sheet 1, the second sheet 2, the first tension part 31 and the second tension part 32 may be made of a PVC material, a thermoplastic polyurethane elastomer (TPU) material or any other elastic material suitable for manufacturing the inflatable product. The wire may be made of a stretch-resistant material or a fully stretched material, such as natural fiber, synthetic fiber, polyester, nylon, polypropylene, polyethylene, glass fiber, carbon fiber, ceramic, etc.

FIG. 1 shows an example aspect in which the first sheet 1 and the second sheet 2 of the inflatable product are arranged substantially in parallel. The first sheet 1 and the second sheet 2 gradually move away from each other during the inflation of the inflatable product, and the internal tension member 3 connected between the first sheet 1 and the second sheet 2 may advantageously prevent the first sheet 1 and the second sheet 2 from moving too far apart from each other. As shown in FIG. 1, the first outer base strip 312 of the first tension part 31 is connected to the first sheet 1, and the second outer base strip 322 of the second tension part 32 is connected to the second sheet 2. As the first outer base strip 312 is connected to the first material sheet 1, the first inner base strip 311 and the first section 331 of the wound element 33 are indirectly connected to the first sheet 1, and as the second outer base strip 322 is connected to the second sheet 2, the second inner base strip 321 and the second section 332 of the wound element 33 are indirectly connected to the second sheet 2. The wound element 33 further comprises third portions 333 located between the first section 331 and the second section 332 of the wound element. The third portions 333 have a tension effect so as to maintain the specific shape of the inflatable product when the internal tension member 3 has been connected between the first sheet 1 and the second sheet 2.

With regard to the internal tension member 3 of the inflatable product shown in FIG. 1, an example manufacturing apparatus therefor in accordance with the present invention is shown with reference to FIGs. 2 to 10.

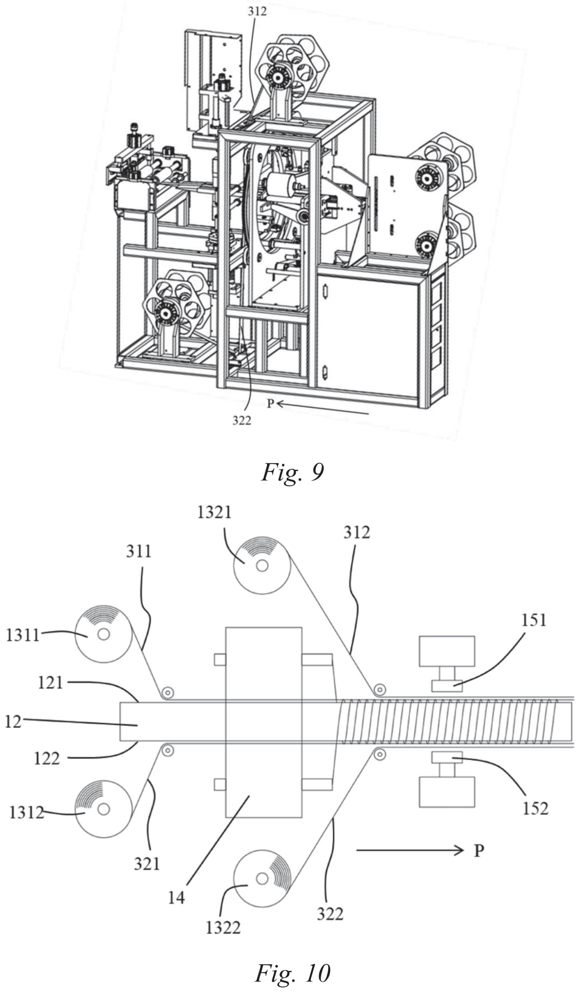

FIG. 10 shows a partial schematic diagram of the principle of an apparatus according to an example embodiment. FIGs. 2 to 3 show perspective views of an apparatus 10 for manufacturing an internal tension member 3 of an inflatable product (hereinafter referred to as the apparatus) in a non-operating state from two perspectives, in which a production process direction of the product in the apparatus is shown with a direction P. As shown in conjunction with FIGs. 2, 3 and 10, the apparatus 10 comprises a support frame 11, a base plate 12, a base strip conveying device 13, a wire winding device 14, and a welding device 15. The base plate 12 is sized and oriented to enable it to pass through the inside of the support frame 11. The base strip conveying device 13 comprises two inner base strip reels 131, two outer base strip reels 132, and a traction wheel 133 which are used for continuously supplying the base strip. The traction wheel 133 is adapted to continuously pull four base strips through the apparatus. Specifically, the two inner base strip reels 131 are a first inner base strip reel 1311 and a second inner base strip reel 1312, and the two outer base strip reels 132 are a first outer base strip reel 1321 and a second outer base strip reel 1322.

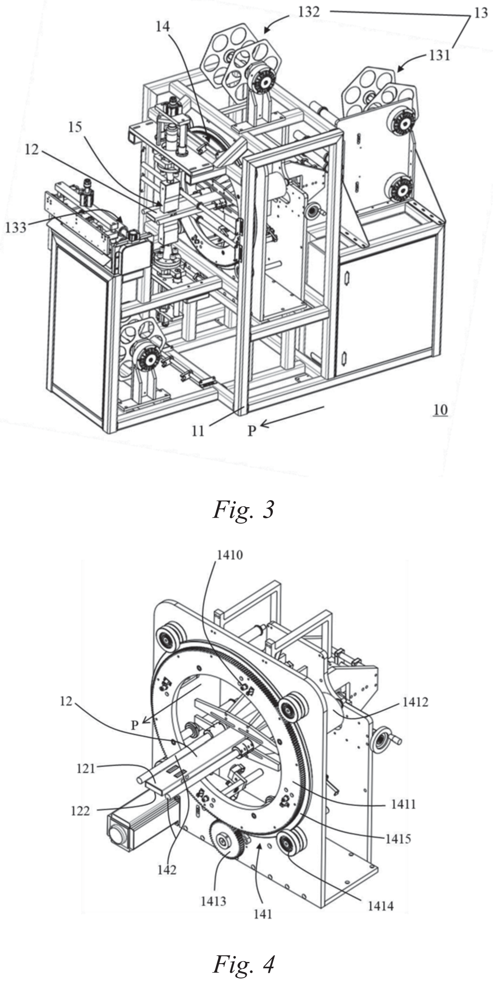

**In** order to clearly illustrate the wire winding device 14, FIG. 4 shows only the wire winding device 14 and the base plate 12 passing through the inside of the wire winding device from the same perspective as that of FIG. 3. The wire winding device 14 comprises a rotation device 141, arranged around the base plate 12, and wire winding guide shafts 142, symmetrically arranged on opposite sides of the base plate 12. The rotation device 141 is adapted to wind the wire around two moving inner base strips in a rotating manner. In particular, the rotation device 141 comprises a ring-shaped rotary table 1411 and several spools 1412, wherein the ring-shaped rotary table 1411 is provided with several uniformly spaced wire-outlet heads 1410 on its circumference, each of the wire-outlet heads 1410 corresponding to one of the spools 1412. As shown in FIG. 4, the ring-shaped rotary table 1411 may be provided with four uniformly spaced wire-outlet heads 1410 on its circumference, such that the wire in each wire-outlet head 1410 comes from one spool 1412 corresponding thereto. With respect to the driving manner of the rotation device 141, FIG. 4 shows a driving gear 1413, for rotating the ring-shaped rotary table 1411. The driving gear 1413 rotates under the action of a power device, for example an electric motor, and teeth of the driving gear 1413 mesh with teeth of the ring-shaped rotary table 1411, thereby rotating the ring-shaped rotary table 1411. The rotation device 141 further comprises rotary guiding wheels 1414, for example four rotary guiding wheels 1414, wherein the rotary guiding wheels 1414 are engaged with an edge portion 1415 of the rotation device 141 to guide and position the rotation of the ring-shaped rotary table 1411. With a direction P (shown in FIG. 3) being a direction of the product through the apparatus, the edge portion 1415 is located behind the ring-shaped rotary table 1411 and protrudes radially outward from the teeth of the ring-shaped rotary table 1411, thereby forming a protruding edge portion 1415. The ring-shaped rotary table 1411 may be provided with one wire-outlet head 1410, two uniformly spaced wire-outlet heads 1410, three uniformly spaced wire-outlet heads 1410, or more than three wire-outlet heads on its circumference.

As shown in conjunction with FIG. 10, the base plate 12 in FIG. 4 has an upper surface 121 and a lower surface 122. The upper surface 121 and the lower surface 122 may be the upper and lower surfaces, respectively, of a base plate 12 which is a single piece. In this case, a spacing between the upper surface 121 and the lower surface 122 may be constant. Alternately, the base plate may 12 comprise two different base plates (not shown), each comprising one of the upper surface 121 and the lower surface 122. The two different base plates may be arranged in parallel, and the distance between the two base plates may be adjustable such that the distance between the upper surface 121 and the lower surface 122 may, likewise, be adjustable. By adjusting the distance between the upper surface 121 and the lower surface 122, the distance between two inner base strips may be adjusted, that is to say the height of the third section 333 of the wound element 33 shown in FIG. 1 may be adjusted, so as to meet the requirements of different inflatable products for their internal tension members.

The wire winding device 14 may also comprise the wire winding guide shafts 142 symmetrically arranged on two sides of the base plate 12. An adjustment may also be realized by the wire winding guide shafts 142. Because the wire from the wire-outlet head 1410 is wound onto two wire winding guide shafts 142 on the two sides of the base plate 12, the span of the wire wound on the two wire winding guide shafts 142 may be adjusted by adjusting a distance between the two wire winding guide shafts 142, thereby adjusting a height of the wire wound on the two inner base strips. As discussed above, there may be one or more wires wound onto the two wire winding guide shafts 142. In a case in which two or more wires are simultaneously wound onto the two wire winding guide shafts 142, since wire-outlet directions relative to the two wire winding guide shafts 142 are different at the same time point, the two or more wires may be simultaneously wound in parallel. The wire winding guide shaft 142 may be provided with a thread (not shown), and a pitch of the thread may be determined such that the wire is exactly wound in a recess of the thread during winding.

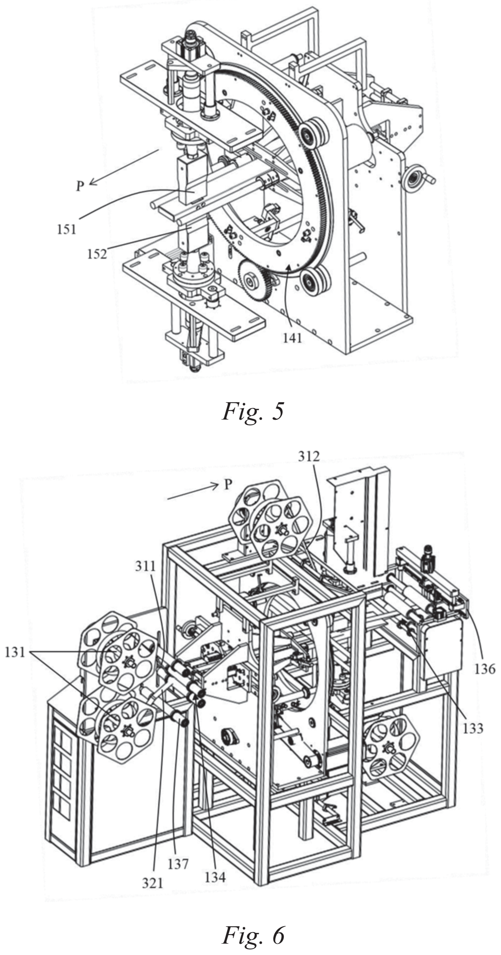

For the purpose of clarity again, FIG. 5 shows, from the same perspective as FIG. 3, only the wire winding device 14, the base plate 12 and the welding device 15, wherein the welding device 15 comprises a first welding head 151 and a second welding head 152. As shown in conjunction with FIG. 3, the welding device 15 is positioned between the wire winding device 14 and the traction wheel 133. The welding device 15 is adapted to respectively weld the two inner base strips to the corresponding two outer base strips. The two inner base strips are separated from each other before and after welding as they are arranged on different surfaces of the base plate 12.

FIGs. 6 to 9 show perspective views of operating states of the apparatus 10 from different perspectives. Similarly, the direction P in the figures shows the production process direction of the product within the apparatus. As shown in conjunction with FIG. 1, the apparatus further comprises at least one inner base strip tension wheel 134 adapted to the two inner base strip reels 131 and at least one outer base strip tension wheel 135 adapted to the two outer base strip reels 132. As shown in conjunction with FIG. 10, the first inner base strip reel 1311 and the second inner base strip reel 1312 of the two inner base strip reels 131 are respectively used to convey the first inner base strip 311 and the second inner base strip 321, and the inner base strip tension wheel 134 is used for tensioning the first inner base strip 311 and the second inner base strip 321 and respectively guiding the first inner base strip and the second inner base strip to the upper surface 121 and the lower surface 122 of the base plate 12; and the first outer base strip reel 1321 and the second outer base strip reel 1322 of the two outer base strip reels 132 are respectively used to convey the first outer base strip 312 and the second outer base strip 322, and the outer base strip tension wheel 135 is used for tensioning the first outer base strip 312 and the second outer base strip 322 and respectively guiding the first outer base strip and the second outer base strip to the upper surface 121 and the lower surface 122 of the base plate 12, so that the first outer base strip 312 covers the first inner base strip 311 and the second outer base strip 322 covers the second inner base strip 321. Thus, in the production process direction P of the product, the outer base strip tension wheel 135 is located downstream of the inner base strip tension wheel 134. **In** an example embodiment as shown in FIGs. 6 to 9, two inner base strip tension wheels 134 and two outer base strip tension wheels 135 are provided. Optionally, one inner base strip tension wheel 134 and one outer base strip tension wheel 135 may be provided such that the two inner base strip reels 131 and the two outer base strip reels 132 are not required.

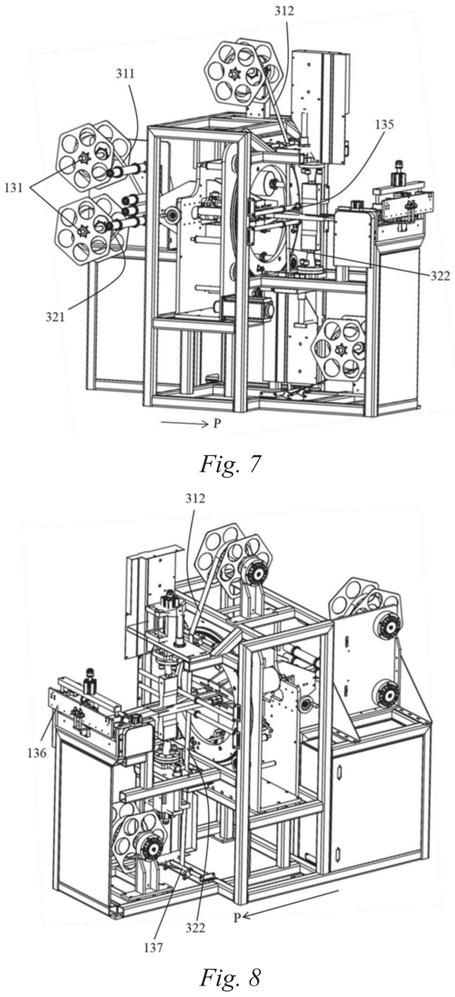

According to an example embodiment, the apparatus may further comprise several reverse wheels, for example several reverse wheels 137, as shown in FIGs. 6 and 8. By providing the reverse wheels 137, the asymmetrical arrangement of the two inner base strip reels 131 and the two outer base strip reels 132 may also be realized, so that the arrangement position of various devices in the apparatus can be optimized to reduce the space occupied by the apparatus.

According to an example embodiment, as shown in FIGs. 6 and 8, the apparatus may further comprise a cutoff device 136 arranged on an output end of the traction wheel 133. As previously mentioned, the traction wheel 133 is adapted to continuously pull four base strips. In particular, with regard to these four base strips, the wire is wound onto the first inner base strip 311 and the second inner base strip 321 in a spiral manner. After the first outer base strip 312 is welded to the first inner base strip 311 and the second outer base strip 322 is welded to the second inner base strip 321, the four base strips may be simultaneously driven by the traction wheel 133 and output to form the internal tension member 3. The cutoff device 136 may be is arranged on the output end of the traction wheel 133, and therefore, it can be cut off or not cut off according to actual needs, or cut off at a desired length according to needs.

According to another example embodiment of the present invention, a method for manufacturing an internal tension member of an inflatable product, is provided. According to this method: a first inner base strip 311 and a second inner base strip 321 are conveyed to a wire winding device 14, continuously and in parallel, preferably by two inner base strip reels 131 and a traction wheel 133 of a base strip conveying device 13. At least one continuous wire is wound around the first inner base strip 311 and the second inner base strip 321 preferably by the wire winding device 14, such that the at least one continuous wire is drawn from a spool 1412 and wound onto wire winding guide shafts 142 at two sides of a base plate 12 through a wire-outlet head 1410. A first outer base strip 312 and a second outer base strip 322 are conveyed continuously and in parallel, preferably by two outer base strip reels 132 and the traction wheel 133 of the base strip conveying device 13, such that the first outer base strip 312 covers the first inner base strip 311 and the second outer base strip 322 covers the second inner base strip 321. **In** this operation, the at least one continuous wire is wound thereby forming first portions 331 sandwiched between the first inner base strip 311 and the first outer base strip 312 and second portions 332 sandwiched between the second inner base strip 321 and the second outer base strip 322. A part of the continuous wire that is not sandwiched between base strips forms third portions 333. Preferably the first outer base strip 312 is welded to the first inner base strip 311 by a first welding head 151 of a welding device 15, and simultaneously, the second outer base strip 322 is welded to the second inner base strip 321 by a second welding head 152. The first portions 331 and the second portions 332 of the at least one continuous wire are sandwiched by this welding, preventing a deformation of the third section 333 in a direction of force during inflating and tensioning, and thus enabling the third section 333 to provides a stable tensile force.

For different inflatable products having different requirements with respect to a height of the third section 333 of the internal tension member 3, the manufacturing method according to the present invention may further comprise, a step of adjusting a distance between the two wire winding guide shafts 142 of the wire winding device 14 such that the continuous wire is wound to form the third section 333 with a desired height. The distance between the two wire winding guide shafts 142 may be adjusted gradually during an operation process of the apparatus to generate a third section 333 with a gradient height, such that the internal tension member 3 is connected in the inflatable product, and a first sheet 1 and a second sheet 2 of the inflatable product that are connected by the internal tension member 3, are not always separated by a same distance after inflation of the inflatable product is completed.

According to an example embodiment of the present invention, an inflatable product having the internal tension member 3 of the present invention, described above, is provided. As an inflatable mattress 20 shown, for example, in FIGs. 11a to 11c, an inflatable mattress 20 comprises a surface sheet 201 and a bottom sheet 202 spaced apart from each other, and a lateral confining sheet 203 and an internal tension member 3a. A plurality of internal tension members 3a may be arranged in parallel in a longitudinal direction of the inflatable product. Each of the internal tension members 3a comprises a first tension part 31a and a second tension part 32a arranged in parallel, where the first tension part 31a and the second tension part 32a are continuous in a transverse direction of the inflatable mattress. Each of the internal tension members 3a further comprises a wound element 33a connecting the first tension part 31a and the second tension part 32a, and the wound element 33a draws the first tension part 31a and the second tension part 32a after inflation of the inflatable mattress 20, thereby drawing the surface sheet 201 connected to the first tension part 31a and the bottom sheet 202 connected to the second tension part 32a without over-expansion. The first tension part 31a and the second tension part 32a are respectively connected to the surface sheet 201 and the bottom sheet 202 by welding, gluing, etc. The first tension part 31a may be welded to the surface sheet 201 and a welding mark 310 therebetween may be a non-closed line. The welding mark 310 may be a straight line. The second tension part 32a is welded to the bottom sheet 202 and a welding mark therebetween may also be a straight line. As shown in FIG. 11a, a plurality of parallel straight lines may be formed on the surface sheet 201 and the bottom sheet 202 of the inflatable mattress with this connection manner, thereby providing a concave- convex appearance on the surface sheet 201 and the bottom sheet 202 after inflation. With regard to other inflatable products comprising the first sheet 1 and the second sheet 2 spaced apart from each other, FIG. 11d shows a wound portion 300 of the internal tension member that is to be connected to the first sheet 1 and the second sheet 2.

FIGs. 12a to 12c show an inflatable mattress 30 of another example embodiment of the present invention. The inflatable mattress comprises a plurality of internal tension members 3b which are arranged in parallel in the longitudinal direction of the inflatable product. A first tension part 31b and a second tension part 32b of the internal tension member 3b are wider than the first tension part 31a and the second tension part 32a of the internal tension member 3a shown in FIGs. 11a to 11c, and therefore, its welding mark 320 may be a closed ring around the periphery of the first tension part 31b, such that the first wider tension part 31b is firmly connected to the inside of the inflatable product.

FIGs. 13a to 13c show an inflatable mattress 40 of another example embodiment of the present invention. The inflatable mattress comprises a plurality of internal tension members 3c which are arranged in a lattice manner. **In** the transverse direction of the inflatable product, a first tension part 31c and a second tension part 32c of the internal tension member 3c are not continuous, as compared with the first continuous tension part 31b and the second continuous tension part 32b of the internal tension member 3b shown in FIGs. 12a to 12c, and its welding mark 330 is a plurality of closed rings in a lattice arrangement. With regard to other inflatable products comprising the first sheet 1 and the second sheet 2 spaced apart from each other, FIG. 13d shows a ring-shaped portion 400 of the internal tension member that is to be connected to the first sheet 1 and the second sheet 2.

The above-mentioned internal tension member 3a, the internal tension member 3b, and the internal tension member 3c, which are sized differently, provide different concave-convex appearances of surfaces for the inflatable products after inflation.

In addition to an inflatable mattress formed by a method in which the internal tension member is directly connected to the first sheet 1 and the second sheet 2 shown in FIGs. 11a to 13d, FIGs. 14a to 14b show an inflatable mattress 50 of another example embodiment according to the present invention. The inflatable mattress 50 comprises a surface sheet 501 and a bottom sheet 502 spaced apart from each other, and further comprises an internal tension member 3d. A plurality of internal tension members 3d are arranged in parallel, each of the internal tension members 3d comprises a first tension part 31d and a second tension part 32d arranged in parallel, wherein the first tension part 31d is connected to a surface sheet 501 by an auxiliary sheet 510. In particular, the first tension part 31d is connected to a middle part 511 of the auxiliary sheet 510, and two side parts 512 of the auxiliary sheet 510 that are symmetric relative to the middle part 511 are connected to the surface sheet 501. It can be seen from FIG. 14b that the auxiliary sheet 510 and the internal tension member 3d form a Y-shaped tension member, wherein the auxiliary sheet 510 is tightly attached to the first tension part 31d by the middle part 511 to form a branch portion of the Y-shaped tension member, and the internal tension member 3d forms a main portion of the Y-shaped tension member. The second tension part 32d may also be connected to a bottom sheet 502 by the auxiliary sheet.

The inflatable product may be an inflatable spa, for example an inflatable spa60 of an example embodiment as shown in FIG. 15. The inflatable spa 60 comprises an outer wall 601 and an inner wall 602 spaced apart from each other, and further comprises a plurality of internal tension members 3e. Each of the internal tension members 3e comprises a first tension part 31e and a second tension part 32e arranged in parallel, wherein the first tension part 31e is connected to the outer wall 601 and the second tension part 32e is connected to the inner wall 602.

The inflatable product may also be an inflatable surfboard. FIGs. 16a to 16b show perspective views of a single-air-chamber surfboard 70 of an example embodiment of the present invention and a cross-sectional view thereof along a section line E-E. FIGs. 17a to 17b show perspective views of a double-air-chamber surfboard 80 of an example embodiment and a cross-sectional view thereof along a section line F-F. With regard to a single-air-chamber surfboard and a double-air-chamber surfboard with different volumes and different load-bearing capacities, it is possible to select internal tension members arranged at different intervals.

As discussed herein, one or more example embodiments of the present invention may provide an inflatable product, comprising a first outer sheet, a second outer sheet, and an internal tension member arranged between the first outer sheet and the second outer sheet, wherein the internal tension member comprises: a first inner base strip and a second inner base strip; a first outer base strip and a second outer base strip; and at least one continuous wire wound around the first inner base strip and the second inner base strip, wherein the first inner base strip is attached to the first outer base strip, the second inner base strip is attached to the second outer base strip, the at least one continuous wire is partly fixed between the first inner base strip and the second outer base strip and between the second inner base strip and the second outer base strip, and the first outer base strip and the second outer base strip are connected to the first outer sheet and the second outer sheet, respectively.

In an example embodiment, rather than forming the internal tension member by welding, any of a number of other suitable connection manners may be used. For example, referring to FIG. 1, the first inner base strip 311 may be attached to the first outer base strip 312 by gluing, and the second inner base strip 321 may be attached to the second outer base strip 322 by gluing.

In addition to the foregoing explanations, the following enumerated aspects are also relevant for the present disclosure but should not be mistaken with the attached claim set:
Aspect 1: An apparatus 10 for manufacturing an internal tension member of an inflatable product, the apparatus 10 comprising: a support frame 11; a base plate having a size which fits within an inside of the support frame; a base strip conveying device 1 comprising: two inner base strip reels 131, two outer base strip reels 132, and a traction wheel 133; a wire winding device 14 comprising a rotation device 141 disposed around the base plate 12 and wire winding guide shafts 142 symmetrically arranged with respect to the base plate 12; and a welding positioned between the wire winding device 14 and the traction wheel 133.
Aspect 2: The apparatus according to aspect 1, wherein a distance between an upper surface of the base plate and a lower surface of the base plate is constant or adjustable.
Aspect 3: The apparatus according to aspect 2, wherein at least one of the wire winding guide shafts 142 is moveable with respect to another of the wire winding guide shafts 142.
Aspect 4: The apparatus 10 according to aspect 2, wherein the base strip conveying device further comprises at least one inner base strip tension wheel 134 adapted to the two inner base strip reels 131 and at least one outer base strip tension wheel 135 adapted to the two outer base strip reels 132.
Aspect 5: The apparatus 10 according to aspect 1, wherein the rotation device 141 comprises a ring-shaped rotary table 1411 and a plurality of spools 1412, wherein the ring- shaped rotary table 1411 comprises a plurality of uniformly spaced wire-outlet heads 1410 disposed on a circumference thereof, each of the plurality of wire-outlet heads 1410 corresponding to one of the plurality of spools 1412.
Aspect 6: The apparatus 10 according to aspect 1, wherein the apparatus further comprises a cutoff device 136 arranged on an output end of the traction wheel 133.
Aspect 7: The apparatus 10 according to aspect 1, wherein: the base plate 12 is configured to pass through an inside of the support frame 11; a first inner base strip reel 1311 of the two inner base strip reels 131 is configured to supply a first inner base strip 311 and a second inner base strip reel 1312 of the two inner base strip reels 131 is configured to supply a second inner base strip 321, a first outer base strip reel 1321 of the two outer base strip reels 132 is configured to supply a first outer base strip 312 and a second outer base strip reel 1322 of the two outer base strip reels 132 is configured to supply a second outer base strip 322, the traction wheel 133 is configured to tension each of the first inner base strip 311, the second inner base strip 321, the first outer base strip 312, and the second outer base strip 322; the rotation device 141 is configured to wind the wire around the base plate 12, each wire winding guide shafts 142 is configured to guide the wire around the base plate 12; and the welding device 15 is configured to weld the first inner base strip 311 to the first outer base strip 312 and to weld the second inner base strip 321 to the second outer base strip 312.
Aspect 8: A method for manufacturing an internal tension member of an inflatable product comprising the step of: conveying, in parallel, a first inner base strip 311 and a second inner base strip 321 to a wire winding device 14; winding a wire around the first inner base strip 311 and the second inner base strip 321; conveying, in parallel, a first outer base strip 312 and a second outer base strip 322, such that the first outer base strip 312 faces the first inner base strip 311 and the second outer base strip 322 faces the second inner base strip 321; and welding the first outer base strip 312 to the first inner base strip 311 and welding the second outer base strip 322 to the second inner base strip 321.
Aspect 9: The method according to aspect 8, further comprising a step of adjusting a size of a circumference of the winding of the wire.
Aspect 10: An internal tension member 3 of an inflatable product, the internal tension member 3 comprising: a first tension part 31 comprising a first inner base strip 311 and a first outer base strip 312; a second tension part 32, spaced apart from the first tension part 31 and comprising a second inner base strip 321 and a second outer base strip 322; and a wound element 33 comprising a wire wound in a spiral manner around the first inner base strip 311 and the second inner base strip 321 wherein the first inner base strip 311 and the first outer base strip 312 are welded together with first portions 331 of the wire therebetween, and the second inner base strip 321 and the second outer base strip 322 are welded together with second portions 332 of the wire therebetween.
Aspect 11: The internal tension member 3 according to aspect 10, wherein the first tension part 31 is substantially parallel to the second tension part 32, and a pitch at which the wire is wound around the first inner base strip 311 and the second inner base strip 321 is even.
Aspect 12: An inflatable product, in particular an inflatable mattress or an inflatable spa or an inflatable surfboard, comprising: a first sheet 1; a second sheet 2 spaced apart from the first sheet 1; and an internal tension member 3 according to aspect 10, wherein the first outer base strip 312 is connected to the first sheet 1 and the second outer base strip 322 is connected to the second sheet 2.
Aspect 13: The inflatable product according to aspect 12, further comprising: at least one auxiliary sheet 510 comprising: two side parts 512 connected to one of the first sheet 1 and the second sheet 2, and a middle part 511, disposed between the two side parts 512 and connected to one of the first outer base strip 312 and the second outer base strip 322.
Aspect 14: The inflatable product according to aspect 12, wherein: the first outer base strip 312 is welded to the first sheet 1 such that a welding mark 310 thereof is one of a closed ring and a line; the second outer base strip 322 is welded to the second sheet 2 such that a welding mark 310 thereof is one of a closed ring and a line; and a plurality of internal tension members 3 is arranged in a lattice manner in the inflatable product.
Aspect 15: The inflatable product according to aspect 12, wherein each of the first sheet 1, the second sheet 2, the first tension part 31, and the second tension part 32 comprises one of polyvinyl chloride and thermoplastic polyurethane elastomer.

It may be understood that the exemplary embodiments described herein may be considered in a descriptive sense only and not for purposes of limitation. Descriptions of features or aspects within each exemplary embodiment may be considered as available for other similar features or aspects in other exemplary embodiments.

While exemplary embodiments have been described with reference to the figures, it will be understood by those of ordinary skill in the art that various changes in form and details may be made therein without departing from the scope of protection of the present invention as defined by the claims.

## Claims

1. An internal tension member (3) of an inflatable product, the internal tension member (3) comprising:
a first tension part (31) comprising a first inner base strip (311) and a first outer base strip (312);
a second tension part (32), spaced apart from the first tension part (31) and comprising a second inner base strip (321) and a second outer base strip (322); and
a wound element (33) comprising a wire wound in a spiral manner around the first inner base strip (311) and the second inner base strip (321);
wherein the first inner base strip (311) and the first outer base strip (312) are welded together with first portions (331) of the wire therebetween, and the second inner base strip (321) and the second outer base strip (322) are welded together with second portions (332) of the wire therebetween.

2. The internal tensioning member (3) according to claim 1 or 2, wherein the wire being made of a stretch-resistant material or a fully stretched material.

3. The internal tensioning member (3) according to claim 3, wherein the wire is made of natural fiber, synthetic fiber, polyester, nylon, polypropylene, polyethylene, glass fiber, carbon fiber, or ceramic.

4. The internal tension member (3) according to claim 1, wherein the first tension part (31) is substantially parallel to the second tension part (32), and a pitch at which the wire is wound around the first inner base strip (311) and the second inner base strip (321) is even.

5. An inflatable product, in particular an inflatable mattress or an inflatable spa or an inflatable surfboard, comprising:
a first sheet (1);
a second sheet (2) spaced apart from the first sheet (1); and an internal tension member (3) according to claim 1,
wherein the first outer base strip (312) is connected to the first sheet (1) and the second outer base strip (322) is connected to the second sheet (2).

6. The inflatable product according to claim 5, further comprising: at least one auxiliary sheet (510) comprising:
two side parts (512) connected to one of the first sheet (1) and the second sheet (2), and
a middle part (511), disposed between the two side parts (512) and connected to one of the first outer base strip (312) and the second outer base strip (322).

7. The inflatable product according to claim 5 or 6, wherein:
the first outer base strip (312) is welded to the first sheet (1) such that a welding mark (310) thereof is a closed ring;
the second outer base strip (322) is welded to the second sheet (2) such that a welding mark (310) thereof is a closed ring; and
a plurality of internal tension members (3) is arranged in a lattice manner in the inflatable product.

8. The inflatable product according to claim 5 or 6, wherein:
the first outer base strip (312) is welded to the first sheet (1) such that a welding mark (310) thereof is a line;
the second outer base strip (322) is welded to the second sheet (2) such that a welding mark (310) thereof is a line; and
a plurality of internal tension members (3) is arranged in a lattice manner in the inflatable product.

9. The inflatable product according to claim 5 or 6, wherein:
the first outer base strip (312) is welded to the first sheet (1) such that a welding mark (310) thereof is a line;
the second outer base strip (322) is welded to the second sheet (2) such that a welding mark (310) thereof is a non-closed line; and
a plurality of internal tension members (3) is arranged in a lattice manner in the inflatable product.

10. The inflatable product according to any one of claims 5 to 9, wherein each of the first sheet (1), the second sheet (2), the first tension part (31), and the second tension part (32) comprises one of polyvinyl chloride and thermoplastic polyurethane elastomer.

11. The inflatable product according to any one of claims 5 to 10, wherein the internal tensioning member comprises a ring-shaped portion (400) to be connected to the first and second sheets (1,2), respectively.
